# Europäisches Patentamt
## European Patent Office
## Office européen des brevets

(11) Veröffentlichungsnummer: **0 228 586 B1**

## (12) EUROPÄISCHE PATENTSCHRIFT

(45) Veröffentlichungstag der Patentschrift: **05.08.92**

(51) Int. Cl.5: **G01F 11/10**, C02F 1/68, G01F 13/00

(21) Anmeldenummer: **86116762.5**

(22) Anmeldetag: **02.12.86**

(54) **Vorrichtung zur Dosierung eines feinteiligen, rieselfähigen Stoffes in ein Reaktionsgemisch.**

(30) Priorität: **10.12.85 DE 3543585**

(43) Veröffentlichungstag der Anmeldung:
**15.07.87 Patentblatt 87/29**

(45) Bekanntmachung des Hinweises auf die Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
CH-A- 290 930         DE-A- 1 907 333
DE-A- 3 326 249       NL-A- 7 015 227
NL-C- 15 140          US-A- 3 362 584

(73) Patentinhaber: **Ralf F. Piepho Abwassertechnik GmbH**
**Rittergut 2**
**W-3015 Wennigsen 5(DE)**

(72) Erfinder: **Piepho, Ralf F.**
**Rittergut 2**
**W-3015 Wennigsen 5(DE)**

(74) Vertreter: **Rücker, Wolfgang, Dipl.-Chem. Patentanwalt**
**Bergiusstrasse 2b**
**W-3000 Hannover 51(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Es ist in vielen chemischen und chemisch-physikalischen Verfahren notwendig, Stoffe oder Stoffgemische in feinteiligem, rieselförmigem Aggregatzustand in einen Reaktionsbehälter zuzusetzen, in welchem sich diese Reaktionen abspielen.

So ist beispielsweise in der DE-OS 33 26 248 eine Vorrichtung zur Aufbereitung von verbrauchten Emulsionen, Lösungen oder Industrieabwässern beschrieben unter Verwendung von wenigstens einer in einem Reaktionsbehälter umlaufenden Mischturbine, in der ein chemisches Reaktionstrennmittel, welches sich in diesem feinteiligen, rieselfähigen Zustand befindet, mit dem zu reinigenden Abwasser vermischt wird und das Abwasser mit dem zudosierten Reaktionstrennmittel in einen Absetzbehälter strömt, in welchem Reaktionen chemischer und physikalischer Art vor sich gehen, zu Fällung und Ausflockung führen, welche sedimentieren und von einem mechanischen Gerät vom Boden des Absetzbehälter entfernt und zu einer weiteren Behandlung transportiert werden.

Die Dosierung des Reaktionstrennmittels in das Abwasser geschieht nach dieser Offenlegungsschrift vermittels einer Vorrichtung mit einer Schnecke, die aus einem Vorratsbehälter das Mittel entnimmt. Entsprechend der Rotationsgeschwindigkeit der Schnecke wird mehr oder weniger Reaktionstrennmittel zudosiert.

Wenngleich diese Art der Dosierung in vielen Fällen gute, brauchbare Ergebnisse liefert, so ist sie unter gewissen Umständen und bei einer Anwendung nachteilig, weil die Schnecke direkt von dem Abwasser berührt werden bzw. das Abwasser über die Schnecke mit dem Trennmittel in Verbindung treten kann und zwar beispielsweise dann, wenn sich die Vorrichtung zur Aufbereitung des Abwassers auf einem Träger befindet, der Bewegungen ausführt, beispielsweise auf einem Schiff, auf einer Plattform, von der aus Explorationen im Meer und dergleichen betrieben werden.

Anders ausgedrückt, befindet sich die Vorrichtung zur Aufbereitung des Abwassers mit der herkömmlichen Dosiervorrichtung auf einem Schiff, welches heftige und unkontrollierte Bewegungen ausführt, so kann das Abwasser soweit hochschwappen, daß es die Schnecke benetzt und in den Trennmittelvorrat gelangt und eine ordnungsgemäße und korrekte Dosierung des Trennmittels in den Reaktionsbehälter mit dem Abwasser nicht mehr möglich ist.

Es läßt sich also das in der oben genannten Offenlegungsschrift beschriebene Dosiergerät dann kaum verwenden, wenn aufgrund der geschilderten Umstände der Reaktionsbehälter geschlossen sein muß.

Der vorliegenden Erfindung liegt nunmehr die Aufgabe zugrunde, eine Dosiervorrichtung zu schaffen, die diese Nachteile nicht besitzt, die insbesondere eine Vorrichtung zur Aufbereitung von Abwässern der eingangs erwähnten Art in korrekter und zuverlässiger Weise über längere Zeitspannen mit einem Trennmittel in dosierter Form versorgen kann, wenn die Aufbereitung in einem Reaktionsbehälter erfolgt, der geschlossen ist.

Gelöst wird diese Aufgabe durch eine Dosiervorrichtung mit einem endlosen, umlaufenden Wabenband, dessen eines Trum durch einen im Trennmittelbehälter vorgesehenen Kanal mit geringem Spiel hindurchläuft und darin geführt ist und wobei das endlose Wabenband eine solche Länge hat, daß es in das Abwasser hineinragt.

Das Wabenband ist ein Gliederband, dessen Glieder aus mäanderförmig gebogenen Blechstreifen bestehen, die über Stangen gelenkig miteinander verbunden sind. Solche Wabenbänder sind an sich bekannt und besitzen zufolge ihrer Ausgestaltung eine Vielzahl sogenannter Waben identischer Abmessungen.

Anstelle eines solchen Wabenbandes kann auch ein anderes Fördermittel zur Dosierung des Trennmittels in das Abwasser verwendet werden, welches ebenfalls eine Vielzahl von Zellen konstanten definierten Volumens enthält, die sich beim Durchgang durch den Trennmittelvorrat im Vorratsbehälter füllen und beim Eintritt und Durchgang durch das Abwasser durch die Turbulenz desselben wieder entleert werden.

Das endlose Wabenband läuft um zwei Umlenkrollen, die beide in einem Gehäuse gelagert sind und von denen die eine Umlenkrolle angetrieben ist, wobei die nicht angetriebene Umlenkrolle möglichst tief im Reaktionsbehälter angebracht ist, während die andere, angetriebene Umlenkrolle oberhalb des Raktionsbehälters angeordnet ist. Auch das rückkehrende Trum läuft in der Dosiervorrichtung durch einen aus Bauteilen der Vorrichtung gebildeten kanalartigen Spalt, in welchem das Wabenband nur mit geringem Spiel sich hindurchbewegt.

Es entsteht also durch die Führung des Wabenbandes in Kanälen der Vorrichtung, die im Querschnitt nur geringfügig größer sind als das Wabenband lang und breit ist, praktisch ein wasserdichter Verschluß des Reaktionsbehälters nach oben, so daß die übrige Oberfläche des Reaktionsbehälters durch Platten verschlossen sein kann, durch deren Oberfläche dieses endlose Wabenband mit seinen Führungs- und Halterungsteilen schwertartig hindurchgreift.

Der Vorratsbehälter ist für den Durchgang des Wabenbandes und die Zuführung des Trennmittels von beiden Seiten mit auf gegenüberliegenden Seiten des Wabenbandes liegenden Behälterteilen ausgestattet, so daß das vorzugsweise von einem am Hauptteil des Behälters angeordneten Vibrator in Bewegung gehaltene Trennmittel beide Behälterteile ausfüllt und auch die "Waben" im Wabenband; bei kontinuierlich fortgehender Drehbewegung der Antriebsrolle des Wabenbandes, die in der Art eines Zahnrades und in eine Wabe kämmend eingreift, sich die gefüllten Waben mit dem Trennmittel nach unten und in das Abwasser hinein bewegen, um dort durch die turbulente Strömung, die durch Misch- und Rührturbinen erzeugt wird, freigespült zu werden.

Wenngleich weiter oben die Dosiervorrichtung als vorzugsweise für geschlossene Reaktionsbehälter empfohlen worden ist, so ist sie natürlich auch bei Verwendung von Vorrichtungen wie in der eingangs genannten Offenlegungsschrift ausgestaltet geeignet.

Die Erfindung wird nun anhand eines Ausführungsbeispiels näher erläutert.

In der Zeichnung stellen dar:

Fig. 1     eine Seitenansicht, teilweise im Querschnitt, durch die erfindungsgemäße Dosiervorrichtung,

Fig. 2     eine Ansicht von der Stirnseite der Vorrichtung nach Fig. 1,

Fig. 3     eine Draufsicht auf die Vorrichtung und

Fig. 4     eine Ansicht eines Teiles eines Wabenbandes.

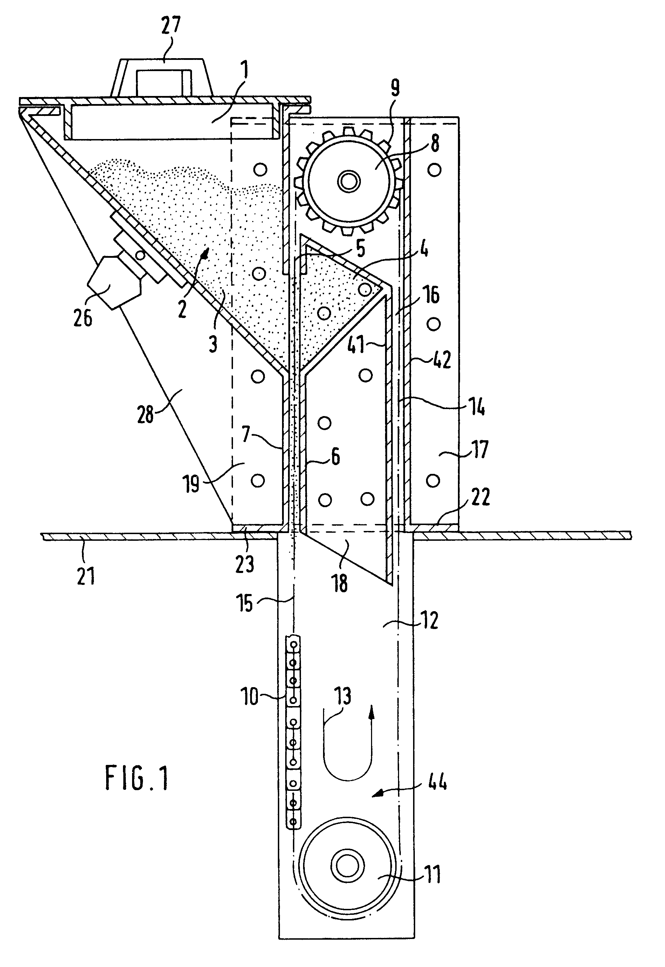

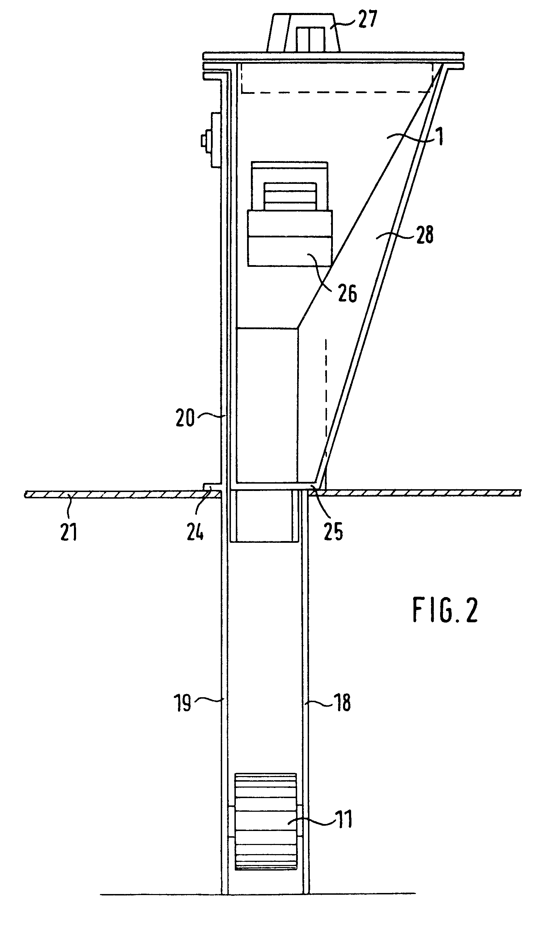

Wie aus den Zeichnungen Fig. 1 bis Fig. 3 hervorgeht, umfaßt die Dosiervorrichtung einen trichterförmigen Vorratsbehälter 1 für das zu dosierende Gut, welches durch das Bezugszeichen 2 angedeutet ist.

Der Vorratsbehälter gliedert sich in zwei Abteilungen, nämlich in die Abteilung 3 und 4, und beide stehen frei miteinander in Verbindung, während das obere Ende des Teilbehälters 4 mit einem Wandteil des Teilbehälters 3 einen im Querschnitt rechteckigen Schlitz oder Kanal bildet, der das Bezugszeichen 5 trägt.

Die unteren Seitenwände der Teilbehälter 3 und 4 laufen konvergierend aufeinander zu und gehen dann in parallel verlaufende Wandteile 6 und 7 über, die Querschnittsabmessungen haben wie der obere kleine Kanal 5, und beide liegen fluchtend zueinander.

Oberhalb des Teilbehälters 4 ist eine Antriebsrolle 8 mit Zahnungen 9 vorgesehen, über die ein sogenanntes endloses Wabenband 10 verläuft, welches am unteren Ende durch eine Führungsrolle 11 geführt wird. Beide Rollen 8 und 11 sind in einem Gehäuse mit dem allgemeinen Bezugszeichen 44 gelagert, welches lediglich aus Seitenwänden 12 besteht und besonders deutlich in Fig. 1 zu sehen ist. Die Antriebsrolle 8 ist über einen Elektromotor mit unterschiedlichen Rotationsgeschwindigkeiten antreibbar. Der Umlauf des endlosen Wabenbandes erfolgt in Richtung des Pfeiles 13.

Das sich aufwärts bewegende Trum 14 wird ähnlich wie das sich abwärts bewegende Trum 15 durch eine dem Querschnitt des Wabenbandes angepaßte und dieses mit geringem Spiel umgebenden Kanal 16 nach oben geführt, während der Zwischenraum und der sonstige Raum zwischen den beiden Trums 14 und 15 und seitlich davon vermittels der Bleche 17, 18, 19 und 20 abgedichtet ist.

Die Kanäle 5 und 7 bzw. 16 bilden zusammen mit dem Wabenband eine Art Labyrinthdichtung nach oben bzw. unten, so daß die Dosiervorrichtung mit dem unteren, nur Seitenwände 20 und 18 umfassenden Teil in ein Reaktionsgefäß eintaucht und zwar unterhalb der Linie 21 und so praktisch wasserdicht durch eine Platte von der zu behandelnden Flüssigkeit abgesperrt werden kann. Die Dosiervorrichtung säße dann mit den Flanschen 22, 23, 24 und 25 oben auf der Deckelplatte 21 des Reaktionsbehälters.

Zur Begünstigung des Zuflusses an Reaktionstrennmittel zum Wabenband kann an dem Vorratsbehälter 1 ein Vibrator 26 befestigt sein. Über den Deckel 27 wird der Behälter 1 mit Reaktionstrennmittel gefüllt. Das Bezugszeichen 28 bezeichnet ein Versteifungsblech.

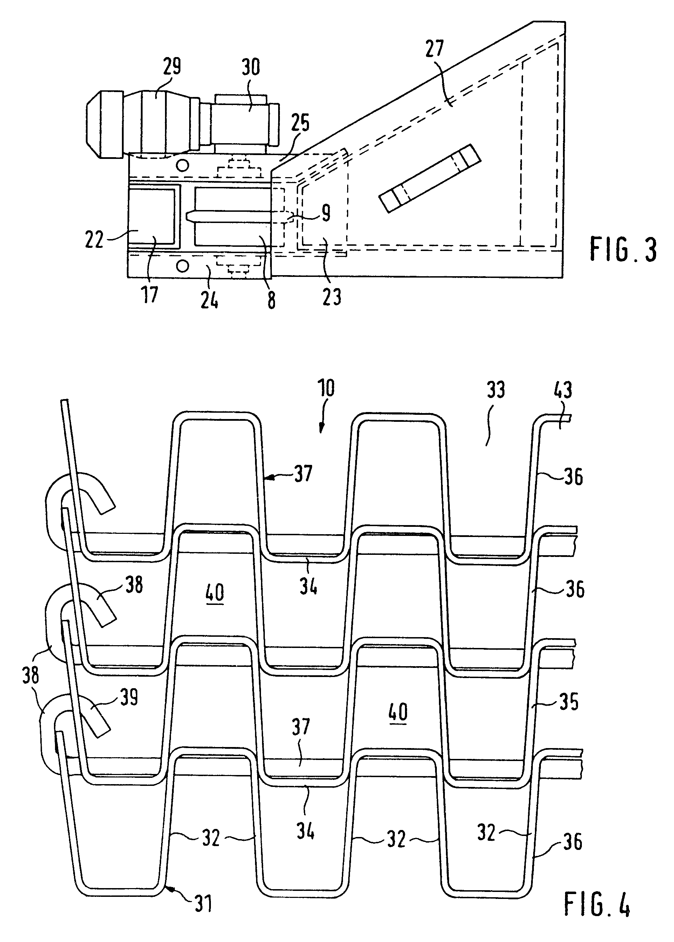

Aus Fig. 3 ist der Antriebsmotor 29 zu erkennen mit dem Getriebe 30 und der regelbar angetriebenen Antriebsrolle 8 mit den Zähnen 9. Direkt unter der Antriebsrolle 8 liegt der kleine Teilbehälter 4 mit dem Trennmittel. Der Deckel zu dem Hauptbehälter 1 bzw. 3 ist noch einmal zu sehen. Die Flansche, mit denen die Befestigung auf dem Deckel erfolgt, befinden sich bei 23, 24 sowie bei 25.

In Fig. 4 ist das Wabenband, welches in der Vorrichtung nach Fig. 1 bis 3 verwendet wird, im Detail und zur Hälfte dargestellt. Das Wabenband besteht aus mäanderförmig gebogenen Stahlblechstreifen 31, die oberflächenvergütet sein können, um gegen Korrosion geschtützt zu sein und weist Waben auf, deren Seitenwände 32 etwas zur oberen Öffnung 33 hin divergierend verlaufen, so daß die Stege eines Wabenbandstreifens 34 in die offenen Enden 33 eine solches Stück hineinragen können, daß einzelne mäanderförmig gebogene Blechstreifen 35 und 36 durch Stäbe 37 miteinander schwenkbar verbunden werden können, wobei die Stäbe an ihren Enden bei 38 durch Umbiegen und Einführen der Enden in dafür vorgesehene Bohrungen 39 gesichert sind.

Auf diese Weise entstehen wabenartige Kammern 40 relativ konstanten Volumens, die zusammen mit den die Kanäle 5, 6, 7 und 14 begrenzenden Blechen, beispielsweise 41 und 42, Hohlräume bilden, in denen das zu dosierende Trennmittel in Richtung des Pfeiles 13 abwärts bewegt wird, bei Überschreitung der Abdeckplatten 21, aber im wesentlichen durch die Turbulenz der Strömung, aus diesen Waben herausfällt bzw. herausgespült wird.

Da die Wanderbewegung des Wabenbandes durch die Vorrichtung entsprechend Fig. 1 für einen Umlauf relativ viel Zeit benötigt, steht auch zur Entfernung des zu dosierenden Gutes ausreichend Zeit zur Verfügung um, beispielsweise durch den Wasserstrom, das zu dosierende Mittel aus den Waben herauszuspülen.

Außerdem ist in jedem Reaktionsbehälter dieser Art ein Rührwerk oder eine Rührturbine vorgesehen, die unter Berücksichtigung dieser Dosiervorrichtung so angeordnet werden kann, daß sie einen heftigen Strom der Flüssigkeit gegen das endlose Wabenband richtet oder es kann eine Leiteinrichtung vorgesehen sein, die einen starken Flüssigkeitsstrom oder Teilstrom auf das Wabenband lenkt, so daß in jedem Fall Gewähr gegeben ist, daß das gesamte Gut an die Flüssigkeit im Reaktionsbehälter abgegeben wird.

Der Umstand, daß das Wabenband naß wird und auch naß wieder mit dem zu dosierenden Trennmittelgut sich beläd, ist ohne Bedeutung, da die Genauigkeit der Dosierung nicht beeinflußt wird. Das auf dem Wabenband befindliche Wasser kann in gewissem Umfang als Schmiermittel dienen.

Das Antriebsrad 8 hat wie oben dargelegt auf seinem Umfang Zähne 9, die zum Transport des Wabenbandes vorzugsweise in die mittlere Wabenreihe 43 eingreifen.

Es genügt, daß in Fig. 4 nur die Hälfte des Wabenbandes dargestellt ist, denn der sich nun nach rechts fortsetzende Teil,der es komplettieren würde, entspricht genau jenem Teil, nur in spiegelbildlicher Anordnung, der in Fig. 4 gezeigt ist.

## Patentansprüche

1. Vorrichtung zur Dosierung eines feinteiligen, rieselfähigen Stoffes in ein Reaktionsgemisch, welches vorzugsweise Industrieabwasser oder eine verbrauchte Emulsion ist, dadurch gekennzeichnet, daß die Dosiervorrichtung ein endloses umlaufendes Wabenband (10) enthält, dessen eines Trum (15) durch einen im Trennmittelvorratsbehälter (1) vorgesehenen Kanal mit geringem Spiel hindurchläuft und darin geführt ist, wobei das endlose Wabenband eine solche Länge hat, daß es in das Abwasser hineinragt.

2. Vorrichtung nach Anspruch 1, dadurch gekennzeichnet, daß das andere aufwärts laufende Trum (14) des Wabenbandes ebenfalls durch einen der Querschnittsform des Wabenbandes angepaßten Kanal (16) hindurchläuft.

3. Vorrichtung nach Anspruch 1 und 2, dadurch gekennzeichnet, daß das Wabenband ein Gliederband ist, dessen Glieder aus mäanderförmig gebogenen Blechstreifen (31) bestehen, die über Stangen (37) gelenkig miteinander verbunden sind.

4. Vorrichtung nach Anspruch 1 bis 3, dadurch gekennzeichnet, daß der Antrieb des Wabenbandes über einen mit Getriebe (30) versehenen Elektromotor (29) regelbar erfolgt.

5. Vorrichtung nach Anspruch 1 bis 4, dadurch gekennzeichnet, daß der Vorratsbehälter (1) für das Trennmittel in zwei Teilbehälter (3, 4) unterteilt ist, so daß beiderseits des Wabenbandes (10) Trennmittel in dieses hineinfließt.

6. Vorrichtung nach Anspruch 1 bis 5, dadurch gekennzeichnet, daß die Kanäle (5, 7 und 16) von all ihren Seiten durch Bleche (17, 18, 19 und 20) abgedichtet sind.

## Claims

1. Device for dosing a finely particulate, pourable material into a reaction mixture which is, especially, industrial waste water or a used emulsion, characterized in that the dosing device contains an endless, circulating honeycombed band (10), one side (15) of which passes with small clearance through a duct provided in the separating agent storage vessel (1) and is guided therein, the endless honeycombed band being of such a length that it penetrates into the waste water.

2. Device according to Claim 1, characterized in that the other, ascending side (14) of the honeycombed band also passes through a duct (16) adapted to the cross-sectional shape of the honeycombed band.

3. Device according to Claims 1 and 2, characterized in that the honeycombed band is a link band, the links of which consist of metal strips (31) bent to a meandering shape, which are connected together in articulated manner by rods (37).

4. Device according to Claims 1 to 3, characterized in that the drive of the honeycombed band is provided in controllable manner by an electric motor (29) provided with gear (30).

5. Device according to Claims 1 to 4, characterized in that the storage vessel (1) for the separating agent is subdivided into two partial vessels (3, 4), so that separating agent flows into the honeycombed band (10) from both sides.

6. Device according to Claims 1 to 5, characterized in that the ducts (5, 7 and 16) are sealed from all sides by metal sheets (17, 18, 19 and 20).

**Revendications**

1. Dispositif pour le dosage d'une matière finement granuleuse et pouvant s'écouler dans un mélange de réaction qui est, de préférence, une eau industrielle résiduaire ou une émulsion usée, caractérisé en ce que le dispositif de dosage comporte une bande à nids d'abeilles (10), sans fin et en mouvement, dont un brin (15) passe avec un faible jeu dans un canal prévu dans le récipient de réserve dans la chambre de séparation (1) et y est guidé, tandis que la bande à nids d'abeilles sans fin a une longueur telle qu'elle pénètre dans les eaux résiduaires.

2. Dispositif selon la revendication 1, caractérisé en ce que l'autre brin (14) montant vers le haut, de la bande à nids d'abeilles, passe également dans un canal (16) adapté à la forme de section de la bande à nids d'abeilles.

3. Dispositif selon les revendications 1 et 2, caractérisé en ce que la bande à nids d'abeilles est une bande articulée, dont les éléments sont constitués de tôle d'acier (31) pliées en forme de méandres, qui sont assemblées les unes aux autres avec articulation, par des tiges (37).

4. Dispositif selon les revendications 1 à 3, caractérisé en ce que l'entraînement de la bande à nids d'abeilles est assuré par un moteur (29) par l'intermédiaire d'une transmission (30) avec possibilité de réglage.

5. Dispositif selon les revendications 1 à 4, caractérisé en ce que le récipient d'alimentation (1) pour l'agent de séparation est subdivisé en deux parties de récipient (3, 4), si bien que l'agent de séparation s'écoule dans celui-ci, de part et d'autre de la bande à nids d'abeilles (10).

6. Dispositif selon les revendications 1 à 5, caractérisé en ce que les canaux (5, 7 et 16) sont fermés de tout côté par des tôles (17, 18, 19 et 20).

FIG.1

FIG.2

FIG. 3

FIG. 4